# EUROPÄISCHE PATENTANMELDUNG

(11) **EP 4 691 740 A1**
(43) Veröffentlichungstag der Anmeldung: **11.02.2026**
(21) Anmeldenummer: 24192906.6
(22) Anmeldetag: 05.08.2024
(51) Int. Cl.: B29C 65/02, B29C 65/82, B65B 9/13, B65B 51/14, B65B 57/02

(54) **VERFAHREN UND VORRICHTUNG ZUM OPTIMIEREN EINES SCHWEISSPARAMETERS BEIM FOLIENSCHWEISSEN**

(71) Anmelder: BEUMER Group GmbH & Co. KG, 59269 Beckum (DE)
(72) Erfinder: Heinrich, Stefan, 59302 Oelde (DE)
(74) Vertreter: Angerhausen, Christoph

(57) **Zusammenfassung**

Die Erfindung betrifft ein Verfahren zum Optimieren zumindest eines Schweißparameters (P1) beim Folienschweißen in einer Ladungssicherungsstation (1), welches die Schritte umfasst:
Durchführen einer ersten Testschweißung (101) durch die Ladungssicherungsstation (1) mit einem ersten Wert (W11) des Schweißparameters (P1), wobei eine erste Schweißnaht (S1) entlang einer Folienbahn (2) eingebracht wird; Durchführen einer zweiten Testschweißung (102) durch die Ladungssicherungsstation (1) mit einem zweiten Wert (W12) des Schweißparameters (P1), wobei eine zweite Schweißnaht (S2) eingebracht wird; Vergleichen einer Eigenschaft (30), vorzugsweise einer mechanischen Eigenschaft und/oder einer optischen Eigenschaft und/oder geometrischen Eigenschaft der ersten und zweiten Schweißnaht (S1, S2), wobei entweder die erste oder die zweite Schweißnaht als optimale Schweißnaht bestimmt wird; und Auswählen eines optimalen Wertes des Schweißparameters, wobei der optimale Wert des Schweißparameters dem Wert des Schweißparameters entspricht, mit welchem die optimale Schweißnaht eingebracht wurde. Ferner betrifft die Erfindung eine Ladungssicherungsstation (1), welches zum Durchführen eines entsprechenden Verfahrens eingerichtet ist.

## Beschreibung

Die Erfindung betrifft das technische Feld des Folienschweißens, insbesondere das Folienschweißen in einer Ladungssicherungsstation.

In Ladungssicherungsstationen werden auf Platten oder ähnlichen Plattformen gestapeltes Stückgut mittels einer Folie gesichert. Hierzu wird der Stückgutstapel und Teile der Palette mit einer Folie aus Polymermaterial umhüllt. Die Folie wird schlauchförmig als endlose Folienbahn bereitgestellt und muss zunächst durch die Ladungssicherungsstation in eine Folienhaube umgeformt werden. Die Folienhaube wird durch die Ladungssicherungsstation über den Stückgutstapel und die Palette gestülpt. Da die Abmessungen des Stückgutstapels naturgemäß von Palette zu Palette stark variieren, muss die Größe der Folienhaube durch die Ladungssicherungsstation individuell an jeden Stückgutstapel angepasst werden. Hierzu wird der Ladungssicherungsstation ein ausreichend langer Abschnitt der Folienbahn zugeführt und ein erstes Ende der Folienbahn mittels einer Schweißeinheit orthogonal zur Vorschubsrichtung der Folienbahn mit einer Schweißnaht verschlossen. Die Folienbahn wird anschließend in Vorschubsrichtung oberhalb der Schweißnaht abgetrennt und ein zweites, weiterhin unverschlossenes Ende des Folienabschnitts in einer Spreizeinheit fixiert. Die nun entstandene Folienhaube wird durch die Spreizeinheit am zweiten Ende in einer Ebene quer zur Vorschubsrichtung aufgeweitet und abschließend über den Stückgutstapel gestülpt. Das Fixieren des Stückgutstapels auf der Palette durch die Folienhaube wird entweder durch eine Schrumpf-Wärmebehandlung der Folie erreicht oder, vorzugsweise in einem sogenannten Hauben-Stretchverfahren, durch die der Folienhaube innewohnende elastische Rückstellkraft gewährleistet.

Während des Aufweitens, aber auch beim sukzessiven Transport und Umschlag des verpackten Stückgutstapels ist die Schweißnaht großen mechanischen Belastungen ausgesetzt. Da die Ladungssicherung im hohen Maße von der Intaktheit der Folienhaube abhängt, darf die Schweißnaht unter Last nicht versagen. Als solches müssen beim Folienschweißen in der Ladungssicherungsstation Schweißparameter sorgsam gewählt werden. Meist entsprechen die Schweißparameter Erfahrungswerten von Mitarbeitern oder Werkseinstellungen, welche mittels einer Schweißeinheit und unter laborähnlichen Bedingungen und nicht an der spezifischen Ladungssicherungsstation ermittelt wurden. Problematisch ist hierbei, dass optimale Schweißparameter von den Umgebungsbedingungen der spezifischen Ladungssicherungsstation abhängen. Eine Änderung in Umgebungstemperaturen, Luftfeuchtigkeit, Partikelbelastung in der Umgebungsluft oder auch abweichende Materialeigenschaften der Folie durch einen Wechsel eines Folienherstellers können ohne für gravierende Unterschiede in der Qualität und Siegelstärke der Schweißnaht.

In den aus dem Stand der Technik bekannten Verfahren wird einer Änderung in den Umgebungsbedingungen entgegengewirkt, indem Temperaturmessungen vorgenommen werden, um die Schweißeinrichtung zu regeln. In Hinblick auf die vielfältigen Einflussfaktoren sind die bekannten Verfahren jedoch zu unpräzise, um eine ausreichende Siegelstärke zu garantieren.

Dieses Problem wird durch ein Verfahren zum Optimieren eines Schweißparameters beim Folienschweißen in einer Ladungssicherungsstation mit den Merkmalen des Anspruchs 1 gelöst. Die abhängigen Ansprüche 2 bis 13 beschreiben vorteilhafte Ausführungsformen. Anspruch 14 betrifft ferner eine Ladungssicherungsstation.

Erfindungsgemäß umfasst das Verfahren zum Optimieren eines Schweißparameters beim Folienschweißen in einer Ladungssicherungsstation die Schritte:
- Durchführen einer ersten Testschweißung durch die Ladungssicherungsstation mit einem ersten Wert des Schweißparameters, wobei eine erste Schweißnaht entlang einer Folienbahn eingebracht wird;
- Durchführen einer zweiten Testschweißung durch die Ladungssicherungsstation mit einem zweiten Wert des Schweißparameters, wobei eine zweite Schweißnaht eingebracht wird;
- Vergleichen einer Eigenschaft, vorzugsweise einer mechanischen Eigenschaft und/oder einer optischen Eigenschaft und/oder geometrischen Eigenschaft der ersten und zweiten Schweißnaht, wobei entweder die erste oder die zweite Schweißnaht als optimale Schweißnaht bestimmt wird; und
- Auswählen eines optimalen Wertes des Schweißparameters, wobei der optimale Wert des Schweißparameters dem Wert des Schweißparameters entspricht, mit welchem die optimale Schweißnaht eingebracht wurde.

Der Erfindung liegt somit der erfinderische Gedanke zugrunde, dass der Schweißparameter in situ, also durch die spezifische Ladungssicherungsstation und in ihrer Produktionsumgebung optimiert und festgestellt wird. Hierdurch werden sowohl die Umgebungsbedingungen als auch Eigenheiten der spezifischen Ladungssicherungsstation bei der Optimierung berücksichtigt.

Beim Vergleich wird die Schweißnaht als optimale Schweißnaht bestimmt, welche Eigenschaften aufweist, die diese Schweißnaht als am geeignetsten zur Versiegelung der Folienbahn ausweist. Die optimale Schweißnaht im Sinne der Erfindung kann auch ein globales Optimum für die Versiegelung der darstellen, welches sich für die Ladungssicherungsstation und die Rahmenbedingungen dieser einstellt. Der korrespondierende optimale Wert des Schweißparameters ermöglicht somit, dass weitere Schweißnähte, die mit diesem Wert des Schweißparameters eingebracht wurden, ähnliche Eigenschaften aufweisen.

Eine mechanische Eigenschaft kann die Biegefestigkeit der Schweißnaht längs oder quer zur Vorschubrichtung sein. Alternativ oder zusätzlich kann die mechanische Eigenschaft eine Torsionsfestigkeit längs oder quer zur Vorschubrichtung sein.

Eine optische Eigenschaft kann eine gleichmäßige Einfärbung, eine durch die Schweißnaht hindurch transmittierte, absorbierte oder reflektierte Strahlungsintensität sein. Eine geometrische Eigenschaft kann eine Breite, eine Tiefe oder ein Winkel der Schweißnaht zur Vorschubrichtung der Folienbahn sein.

Eine Eigenschaft kann ebenfalls ein Mittelwert oder eine Varianz oder ein anderes statistisches Maß der oben genannten Eigenschaften sein. Beim Vergleich können eine Vielzahl von Eigenschaften verglichen werden, wobei die Eigenschaften der Vielzahl von Eigenschaften gleichgewichtet oder individuell gewichtet sind.

Das Verfahren kann nach einem jedem Produktionsstart der Ladungssicherungsstation und/oder nachdem der Ladungssicherungsstation eine neue Rolle mit Folienbahn zugeführt wurde durchgeführt werden. Alternativ oder zusätzlich kann das Verfahren periodisch wiederholt werden, beispielsweise jeden Tag, oder jede Woche oder jeden Monat. Hierdurch kann sichergestellt werden, dass der Schweißparameter auch dann optimal gewählt ist, wenn sich die Umgebungsbedingungen ändern oder sich die Eigenschaften der Ladungssicherungsstation verändern, beispielsweise durch Verschleiß oder Austausch von Maschinenkomponenten.

Der optimale Wert des Schweißparameters kann manuell oder automatisch in eine Maschinensteuerung der Ladungssicherungsstation überführt werden. Nach dem Auswählen und bevor der optimale Schweißparameter in die Maschinensteuerung überführt wird, können eine oder mehrere Überprüfungsschweißungen durchgeführt werden, wobei eine oder mehrere Überprüfungsschweißnähte mit dem optimalen Wert des Schweißparameters in die Folienbahn eingebracht werden. Die Überprüfungsschweißungen können anschließend auf Unregelmäßigkeiten untersucht werden.

Das erste und zweite Durchführen der Testschweißung kann wiederholt werden und beim Vergleich ein Mittelwert und/oder eine Varianz der Eigenschaften der Schweißnähte, welche jeweils mit dem ersten und zweiten Wert des Schweißparameters eingebracht wurden, verglichen werden.

Die erste und die zweite Schweißnaht können in dieselbe Folienbahn eingebracht werden. Die Folienbahn kann zwischen der ersten und der zweiten Testschweißung nicht durchtrennt werden. Die erste Schweißnaht kann in einer Vorschubrichtung der Folienbahn beabstandet von der zweiten Schweißnaht eingebracht werden. Anstelle einer Folienhaube entsteht hierdurch eine planare, tapetenartige Folienbahn, welche in Vorschubrichtung eine Reihe von parallelen, eindeutig den Testschweißungen zuordenbaren Schweißnähten aufweist.

Die Folienbahn kann zwischen dem Durchführen der ersten und zweiten Testschweißung mit einem geringen Folienvorschub durch die Ladungssicherungsstation geführt werden. Hierbei kann der geringe Folienvorschub zwischen 1 % und 75 %, bevorzugt 50 % eines Produktions-Folienvorschubs betragen. Alternativ kann der geringen Folienvorschub zwischen 200 mm bis 500 mm pro Minute sein. Der Produktions-Folienvorschub ist die Geschwindigkeit der Folienbahn in Vorschubrichtung, welche im Normbetrieb der Ladungssicherungsstation vorliegt, um ein zeitsparendes Sichern des Stückgutstapels zu garantieren. Dies garantiert, dass die Schweißnähte in Vorschubrichtung in kleinen Abständen zueinander eingebracht werden und gleichzeitig ausreichend Zeit vergeht, damit die Schweißeinheit der Ladungssicherungsstation abkühlt und einheitliche Rahmenbedingungen für das Einbringen einer nächsten Schweißnaht vorherrschen.

Zwischen dem Durchführen einer ersten Testschweißung und dem Durchführen einer zweiten Testschweißung kann eine Spreizeinheit der Ladungssicherungsstation ein dem Schweißnähten abgewandtes Ende der Folienbahn vertikal bewegen und/oder in einer Ebene quer zur Vorschubsrichtung dehnen. Hierdurch kann sichergestellt werden, dass bei sukzessiven Testschweißungen die Folienbahn ähnliche Folienvorspannung und Spannungszustände aufweist.

Das Verfahren kann das Durchführen weiterer Testschweißungen umfassen. Weiterhin kann mindestens ein zweiter Schweißparameter optimiert werden, wobei zumindest ein erster Wert und ein zweiter Wert des mindestens zweiten Schweißparameters zwischen der ersten und/oder zweiten oder/oder vorzugsweise weiteren Testschweißungen variiert wird, und wobei ein optimaler Wert des zweiten Schweißparameters dem Wert des zweiten Schweißparameters entspricht, mit welchem die optimale Schweißnaht eingebracht wurde.

Ein erster Satz von Testschweißungen kann auf einer ersten Folienbahn und ein zweiter Satz von Testschweißungen kann auf eine zweite Folienbahn eingebracht werden, wobei die erste und die zweite Folienbahn gleiche Materialeigenschaften aufweisen. So kann eine effektive Handhabung des Vergleichs auch bei einer großen Anzahl von Testschweißungen garantiert werden.

Bei jeder Testschweißung kann jeweils nur einer der Werte des Schweißparameters oder des mindestens einen zweiten Schweißparameters verändert werden. Dies ermöglicht eindeutige Rückschlüsse auf eine positive oder negative Auswirkung des Wertes auf die Eigenschaft der entsprechenden Schweißnaht.

Beim Durchführen weiterer Testschweißungen kann der Wert des ersten oder zumindest eines zweiten Schweißparameters zwischen dem ersten und dem zweiten Wert des jeweiligen Schweißparameters in Inkrementen, vorzugsweise in äquidistanten Inkrementen, variiert werden. Das Verfahren kann das Auswählen einer Anzahl von Inkrementen aufweisen, wobei eine Anzahl von Inkrementen manuell ausgewählt oder auf Grundlage der Vorschubgeschwindigkeit und einer Länge der Folienbahn bestimmt wird. Jedem der Schweißparameter können die gleiche oder eine unterschiedliche Anzahl von Inkrementen zugeordnet sein.

Das Verfahren kann das Auswählen von Basisparametern aufweisen, wobei jedem zu optimierenden Schweißparameter ein Wert zugeordnet ist, umfasst und wobei der erste und zweite Wert des ersten und/oder zumindest eines zweiten Schweißparameters automatisch aus den Basisparametern generiert wird. Insbesondere kann aus den Basisparametern eine Testmatrix generiert werden, welche geplante Testschweißungen und zugehörige Werte der Schweißparameter aufweist und wobei beim Durchführen der Testschweißungen die Schweißnähte entsprechend der geplanten Testschweißungen durchgeführt werden. Die Basisparameter können direkt in die Maschinensteuerung eingegeben werden oder in ein Gerät, welches mit der Maschinensteuerung in Kommunikation steht. Die Basisparameter können Schweißparameter bzw. entsprechende Werte aus Werkseinstellung der Schweißeinheit entsprechen. Alternativ können die Basisparameter frei durch einen Bediener der Ladungssicherungsstation gewählt werden. Die Basisparameter können ebenfalls den Schweißparametern und entsprechenden Werten entsprechen, welche vor einem Neustart der Ladungssicherungsstation in der Maschinensteuerung hinterlegt waren. Der erste und zweite Wert des ersten und/oder zumindest eines zweiten Schweißparameters können auf Grundlage von Sicherheitsgrenzen des jeweiligen Schweißparameters generiert werden. Insbesondere kann der erste und der zweite Wert des jeweiligen Schweißparameters um einen Faktor, vorzugsweise zwischen 25% und 50%, zwischen dem Basiswert und einem oberen bzw. unteren Sicherheitswert des jeweiligen Schweißparameters festgelegt werden.

Die Schweißparameter können eine Siegeltemperatur und/oder eine Siegeldauer und/oder eine Abkühlzeit sein. Die Schweißparameter können ebenfalls eine Abkühlzeit innerhalb der Schweißeinheit oder/und eine Abkühlzeit außerhalb der Schweißeinheit sein.

Zusätzlich zu dem Schweißparameter kann ein Prozessparameter, vorzugsweise eine Folienvorspannung und/oder ein Folienvorschub optimiert werden. Hierbei wird beim Durchführen der Testschweißungen ebenfalls ein Wert des Prozessparameters variiert.

Beim Vergleichen kann ein optischer Vergleich, vorzugsweise ein optischer Vergleich mit einem optischen Sensor der Ladungssicherungsstation, zwischen den Schweißnähten durchgeführt werden.

Alternativ oder zusätzlich kann beim Vergleichen zumindest ein mechanischer Vergleich zwischen den Schweißnähten durchgeführt werden. Hierbei können die Schweißnähte längs und/oder quer zur Vorschubrichtung mechanisch belastet werden. Vorzugsweise können die Schweißnähte bis zu einem Versagen der Schweißnähte belastet werden. Beim mechanischen Vergleich könnten die Schweißnähte durch die Spreitzeinheit der Ladungssicherungseinheit mechanisch belastet werden.

Der Vergleich und/oder das Auswählen kann automatisiert, vorzugsweise maschinengestützt durch Mustererkennung, besonders bevorzugt mittels Maschine Learning durchgeführt werden.

Beim Vergleichen kann jeder Schweißnaht ein Gütewert zugeordnet werden, welcher die Eigenschaft der Schweißnaht quantifiziert. Basierend auf den Gütewerten kann ein optimaler Wert des Schweißparameters interpoliert oder extrapoliert werden.

Basierend auf den Gütewerten kann ein weiterer Wert des Schweißparameters für eine zusätzliche Testschweißung generiert werden. Insbesondere kann ein weiterer Wert des Schweißparameters mittels Design of Experiments (DoE) oder eines lokalen Optimum Suchverfahrens bestimmt werden.

Das Verfahren kann das Identifizieren eines Fehlers aufweist, wobei die Eigenschaft der ersten und/oder zweiten und/oder weiteren Schweißnaht mit in einer Datenbank hinterlegten fehlerspezifischen Eigenschaften abgeglichen wird, wobei jeder fehlerspezifischen Eigenschaft zumindest ein Fehler zugeordnet ist. Hier kann jedem Fehler zumindest ein Korrekturwert eines Schweißparameters zugeordnet sein, welcher den erkannten Fehler löst. Anschließend kann eine weitere Testschweißung mit dem Korrekturwert durchgeführt werden oder der Korrekturwert als optimaler Wertes des Schweißparameters ausgewählt werden. Alternativ oder zusätzlich kann nach dem Auswählen eines optimalen Wertes die Eigenschaften und/oder Werte der Schweißparameter und/oder Fehler und/oder optimale Werte der Schweißparameter in der Datenbank als Datensatz hinterlegt werden. Vorzugsweise wird hierbei zumindest ein Korrekturwert generiert, welcher dem in der Datenbank hinterlegten Fehler zugeordnet ist, und dem Wert eines oder einer Vielzahl der Schweißparameter entspricht, welcher den Fehler korrigiert. Die Datenbank kann in die Maschinensteuerung der Ladungssicherungsstation integriert sein oder dezentral auf einem Sever, vorzugsweise cloudgebunden gespeichert sein. Bei einer Inbetriebnahme von Neuanlagen können entsprechende Ladungssicherungsstationen auf die Datenbank zugreifen und den Datensatz bzw. optimale Werte der Schweißparameter für vergleichbare Betriebsbedingungen und/oder Anforderungen herunterladen. Die heruntergeladenen optimalen Werte der Schweißparameter können dann als Basisparameter für ein für ein entsprechendes Verfahren zum Optimieren eines Schweißparameters beim Folienschweißen in der Neuanlage verwendet werden. Alternativ können die optimalen Schweißparameter ohne durchführen des Verfahren als Betriebsparameter übernommen werden.

Das Verfahren kann das Markieren der Schweißnähte aufweisen, wobei jede Schweißnaht mit einer Markierung versehen wird, welche die Schweißnaht eindeutig einem Wert oder dem Schweißparameter zuordnet. Vorzugsweise wird die Markierung mit einem Lasermarkierer auf die Folienbahn aufgebracht.

Die Verfahrensschritte können wie oben dargestellt sequenziell durchgeführt werden. Insbesondere könne zunächst die erste und die zweite und ggf. die weitere Testschweißung durchgeführt werden, bevor das Vergleichen einer Eigenschaft durchgeführt wird. Alternativ kann das Durchführen einer Testschweißung und das Vergleichen und ggf. das Auswählen alternierend aufeinander folgen.

Die Erfindung betrifft ferner eine Ladungssicherungsstation, welche zum Durchführen eines Verfahrens des oben beschriebenen Verfahrens eingerichtet ist. Die Ladungssicherungsstation kann eine Schrumpffolienverpackungsstation oder vorzugsweise eine Stretch-Hoodverpackungsstation sein.

Die Landungssicherungsstation kann eine Sensoreinheit aufweisen, die dazu eingerichtet ist, ein Vergleichen einer Eigenschaft durchzuführen. Vorzugsweise kann die Sensoreinheit ebenfalls ein Auswählen eines optimalen Wertes des Schweißparameters durchführen. Die Sensoreinheit kann dazu eingerichtet sein, mit der Maschinensteuerung der Ladungssicherungsstation zu kommunizieren und Steuerungsbefehle an die Ladungssicherungsstation zu übermitteln. Insbesondere kann die Sensoreinheit als eine Nachrüsteinheit ausgeführt sein, welche das Nachrüsten einer konventionellen Landungssicherungseinheit und somit das Durchführen des oben beschriebenen Verfahrens ermöglicht. Die Sensoreinheit kann in einer Vorschubsrichtung einer Folienbahn stromabwärts einer Schweißeinheit in der Ladungssicherungsstation angeordnet sein.

Die Sensoreinheit kann dazu eingerichtet sein, die Folienbahn in einer Ebene parallel zur Vorschubsrichtung abzutasten, um eine Eigenschaft zu vergleichen. Darüber hinaus kann die Sensoreinheit zusätzlich oder alternativ dazu eingerichtet sein, die Folienbahn in einer Ebene quer zur Vorschubrichtung abzutasten.

Die Sensoreinheit kann einen oder eine Vielzahl von Sensoren aufweisen. Die Sensoren können Light Dependent Resistors (LDR), Photodioden, Phototransistoren, Charged Coupled Device (CCD)-Sensoren, Complementary Metal-Oxide-Semiconductor (CMOS)-Sensoren, Fotovoltaikzellen, Farb- und Spektralsensoren und/oder LIDAR-Sensoren umfassen. Die Sensoreinheit kann eine Digitalkamera aufweisen. Die Sensoreinheit kann ferner Licht- und Strahlungsquellen aufweisen.

Die Sensoreinheit oder Komponenten der Sensoreinheit können an einer Schweißeinheit der Ladungssicherungsstation angeordnet sein. Alternativ können die Sensoreinheit oder Komponenten der Sensoreinheit an einer Spreitzeinheit der Ladungssicherungsstation oder an einem Vertikalholm der Ladungssicherungsstation angeordnet sein.

Weitere Einzelheiten der Erfindung werden anhand der nachstehenden Figuren erläutert. Dabei zeigt:
- Figur 1:: eine Diagrammdarstellung einer ersten Ausführungsform eines erfindungsgemäßen Verfahrens.
- Figuren 2A und 2B:: eine Diagrammdarstellung einer zweiten Ausführungsform des erfindungsgemäßen Verfahrens bzw. eine zugehörige Testmatrix;
- Figur 3:: eine Diagrammdarstellung einer dritten Ausführungsform des erfindungsgemäßen Verfahrens;
- Figuren 4A bis 4C:: exemplarische Schritte einer vierten Ausführungsform eines erfindungsgemäßen Verfahrens durchgeführt in einer Stretch-Hoodverpackungsstation; und
- Figur 5:: in schematischer Darstellung eine Folienbahn hergestellt durch eine Ausführungsform eines erfindungsgemäßen Verfahrens.
- Figur 6A bis 6C: in schematischer Darstellung weitere Ausführungsformen einer erfindungsgemäßen Stretch-Hoodverpackungsstation.

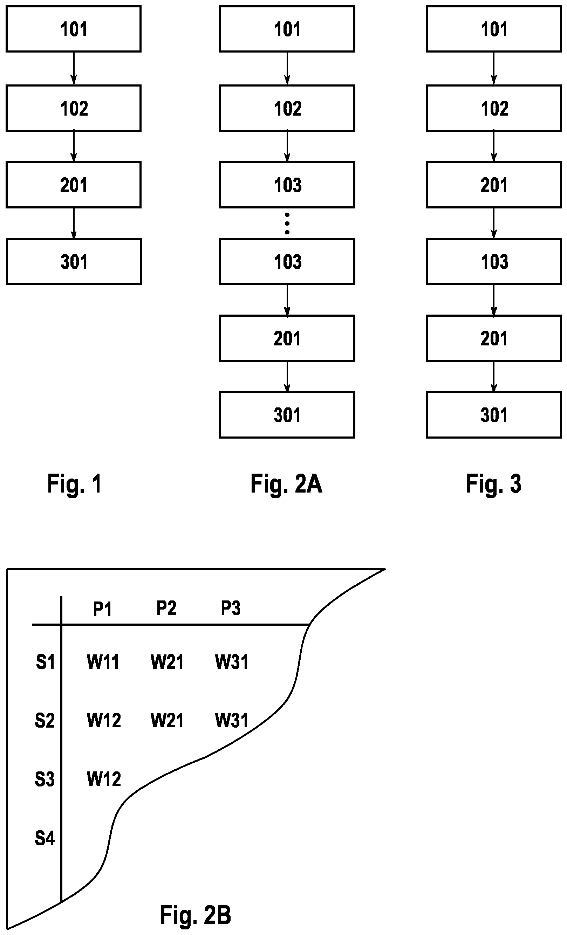

Figur 1 zeigt eine Diagrammdarstellung einer ersten Ausführungsform des erfindungsgemäßen Verfahrens zum Optimieren eines Schweißparameters P1 beim Folienschweißen in einer Ladungssicherungsstation 1. In der dargestellten Ausführungsform ist der Schweißparameter P1 die Siegeldauer. Nach einem Neustart der Ladungssicherungsstation 1 wird ein erster Wert W11 und ein zweiter Wert W12 der Siegeldauer durch einen Bediener der Ladungssicherungsstation 1 manuell in eine Maschinensteuerung der Ladungssicherungsstation 1 eingegeben. Anschließend folgt das Durchführen einer ersten Testschweißung 101 durch die Ladungssicherungsstation 1 mit dem ersten Wert W11 des Siegeldauer P1, wobei eine erste Schweißnaht S₁ entlang einer Folienbahn 2 eingebracht wird. Hieran schließt sich das Durchführen einer zweiten Testschweißung 201 durch die Ladungssicherungsstation 1 mit einem zweiten Wert W12 der Siegeldauer P1 an, wobei eine zweite Schweißnaht S2 in dieselbe Folienbahn eingebracht wird. Anders als in einem normalen Betriebsmodus der Ladungssicherungsstation 1 wird die Folienbahn zwischen dem Durchführen einer ersten Testschweißung und zweiten Testschweißung 101, 102 nicht durchtrennt. Anschließend folgt das Vergleichen einer oder geometrischen Eigenschaft 201, wobei eine Breite und eine Tiefe der ersten und zweiten Schweißnaht S1, S2 verglichen werden. Beim Vergleichen 201 wird ein optischer Vergleich, mit einem optischen Sensor der Ladungssicherungsstation 1 zwischen den Schweißnähten S1, S2 durchgeführt. Basierend hierauf wird entweder die erste oder die zweite Schweißnaht S1, S2 als optimale Schweißnaht bestimmt. Abschließend erfolgt das Auswählen eines optimalen Wertes des Schweißparameters P1, wobei der optimale Wert des Schweißparameters dem Wert des Schweißparameters entspricht, mit dem die optimale Schweißnaht eingebracht wurde. Der optimale Wert des Schweißparameters P1 wird automatisch in der Maschinensteuerung der Ladungssicherungsstation 1 hinterlegt. Anschließend können im normalen Betriebsmodus die Schweißnähte mit dem optimalen Wert des Schweißparameters P1 in die Folienbahn 2 eingebracht werden, um die Folienbahn 2 in eine Folienhabe zu formen.

Figur 2A zeigt eine Diagrammdarstellung einer zweiten Ausführungsform des erfindungsgemäßen Verfahrens. Hierbei wird nunmehr mindestens ein zweiter Schweißparameter P2 optimiert, wobei es sich um eine Siegeltemperatur handelt. Um den zusätzlichen Schweißparametern Rechnung zu tragen, umfasst das Verfahren das Durchführen weiterer Testschweißungen, wobei zumindest ein erster Wert W21 und ein zweiter Wert W22 der Siegeltemperatur P2 zwischen der ersten und/oder zweiten und/oder weiteren Testschweißungen variiert wird, und wobei ein optimaler Wert der Siegeltemperatur P2 dem Wert der Siegeltemperatur P2 entspricht, mit welchem die optimale Schweißnaht eingebracht wurde.

Um der größeren Komplexität an Anzahl von Werten beherrschbar zu halten, wird vor dem Durchführen der Testschweißungen 101, 102 das Auswählen von Basisparametern vollzogen, wobei jedem zu optimierenden Schweißparameter P1, P2 ein Wert zugeordnet ist. Die Basisparameter können beispielsweise folientyp- und folienherstellerspezifische Werte von optimalen Schweißparametern sein, welche durch eine Iteration des Verfahrens in der Vergangenheit bestimmt wurden. Der erste und zweite Wert Wil, W12, W21, W22 des ersten und/oder zumindest einen zweiten Schweißparameters P1 P2 werden automatisch aus den Basisparametern berechnet. Hierzu werden der erste und der zweite Wert des ersten und/oder zumindest eines zweiten Schweißparameters P1 und P2 auf Grundlage von Sicherheitsgrenzen des jeweiligen Schweißparameters P1 und P2 berechnet, wobei der erste und der zweite Wert Wil, W12, W21, W22 des jeweiligen Schweißparameters um einen Faktor von 50% zwischen dem Basiswert und einem oberen bzw. unteren Sicherheitswert des jeweiligen Schweißparameters festgelegt werden. Hieraus ergibt sich die in Fig. 3B schematisch dargestellte Testmatrix. Um direkte Rückschlüsse auf den Einfluss der Werte W11, W12, W21, W22 auf die Eigenschaften der Schweißnähte S1, S2, Sn ziehen zu können, wird bei jeder Testschweißung jeweils nur einer der Werte W11, W12, W21, W22 des Schweißparameters P1 oder des mindestens einen zweiten Schweißparameters P2 verändert. So wird zwischen der ersten Schweißnaht S1 und der zweiten Schweißnaht S2 nur der Wert des ersten Schweißparameters P1 von dem ersten Wert W11 auf den zweiten Wert W21 verändert.

Figur 3 zeigt eine Diagrammdarstellung einer dritten Ausführungsform des erfindungsgemäßen Verfahrens. Anders als bei den zuvor beschriebenen Ausführungsformen wird nach dem Durchführen der ersten und zweiten Testschweißung 101, 102 beim Vergleichen 201 jeder Schweißnaht S1, S2 ein Gütewert zugeordnet. Dieser Gütewert quantifiziert die Eigenschaft der Schweißnaht, beispielsweise die algebraische Differenz zwischen dem Istmaß der Schweißnahtbreite und dem zugehörigen Sollmaß der Schweißnahtbreite normiert mit einem minimalen oder maximalen Grenzmaß der Schweißnahtbreite. Basierend auf den Gütewerten wird ein weiterer Wert des Schweißparameters P1, P2 für eine zusätzliche Testschweißung generiert. Dabei wird der weitere Wert des Schweißparameters P1, P2 gewichtet mit der jeweiligen Höhe der Gütefunktion dichter an den ersten oder zweiten Wert festgelegt. Abschließend erfolgt das Durchführen einer weiteren Testschweißung 103 mit dem weiteren Wert des Schweißparameters. Die Schritte des Vergleichens 201 und des Durchführens einer weiteren Testschweißung 103 werden so lange wiederholt, bis ein ausreichender Gütewert durch eine der Schweißnähte S1, S2, Sn erzielt wird oder bis eine finale Anzahl von Testschweißungen erreicht ist.

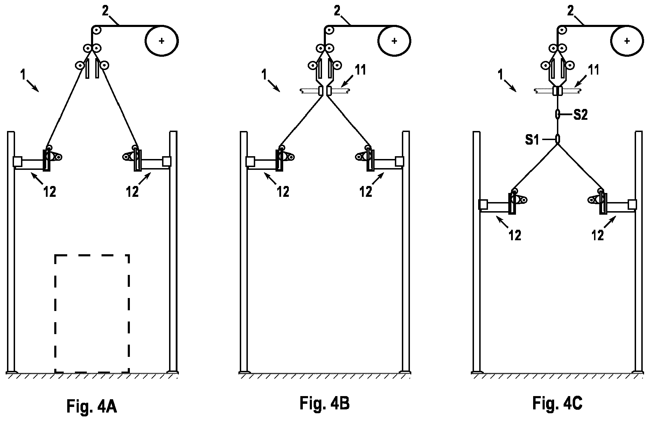

In Figure 4A bis 4C sind drei Konfigurationen einer Ladungssicherungsstation 1 in einer Seitenansicht dargestellt, welche sich exemplarischen Schritten des erfindungsgemäßen Verfahrens zuordnen lassen. Die Ladungssicherungsstation 1 ist als Stretch-Hoodverpackungsstation ausgeführt. Wie in Figur 4A schematisch illustriert dargestellt, befindet sich anders als im Normalbetrieb keine Palette mit Stückgutstapel im Verpackungsbereich (dargestellt durch das gestrichelte Viereck). Analog zum Normalbetrieb wird zunächst die Folienbahn 2 auf eine Vorratsrolle gewickelt und an die Stretch-Hoodverpackungsstation 1 bereitgestellt. Die Folienbahn wird an einem unteren Ende des Folienabschnitts in einer Spreizeinheit 12 fixiert. In Figur 4B wird das Durchführen einer ersten Testschweißung 101 durch die Ladungssicherungsstation 1 mit einem ersten Wert W11 des Schweißparameters P1 gezeigt. Hierzu wird eine Schweißeinheit 11 beidseitig auf die Oberfläche der Folienbahn aufgebracht, um die Folienbahn orthogonal zur Vorschubsrichtung mit einer ersten Schweißnaht S1 zu verschließen. Die erste Schweißnaht wird durch einen Lasermarkierer (nicht dargestellt) mit einer Markierung versehen, welche die erste Schweißnaht S1 eindeutig einem Wert oder dem Schweißparameter zuordnet. Anschließend wird, anders als im Normalbetrieb, die Folienbahn nicht oberhalb der ersten Schweißnaht S1 abgetrennt, sondern ein weiterer Abschnitt der Folienbahn 2 der Stretch-Hoodverpackungsstation 1 zugeführt. Alternativ können die Schweißnähte S1, S2, Sn markiert und den jeweiligen Werten der Schweißparameter W11, W21, W12, W22 zugeordnet werden, indem eine Beabstandung zwischen den Schweißnähten individuell variiert wird. Die Folienbahn 2 wird dabei mit einem geringen Folienvorschub durch die Stretch-Hoodverpackungsstation geführt, wobei der geringe Folienvorschub lediglich 15% eines Normalbetriebs-Folienvorschubs beträgt. Hierdurch kann die Schweißeinheit 11 ausreichend abkühlen, wodurch erreicht wird, dass beim Durchführen der zweiten Testschweißung 102 ähnliche Rahmenbedingungen herrschen. Zusätzlich wird das in Spreizeinheit 12 der Ladungssicherungsstation und das hierin fixierte Ende der Folienbahn vertikal nach unten bewegt. Hierdurch kann sichergestellt werden, dass bei sukzessiven Testschweißungen die Folienbahn ähnliche Folienvorspannung und Spannungszustände aufweist. In Figur 4C ist das Durchführen einer weiteren Testschweißung 103 gezeigt. Die erste und die zweite Schweißnaht S1, S2 befinden sich in Vorschubrichtung stromabwärts auf der Folienbahn 2. Die weiteren Testschweißungen 103 werden so lange durchgeführt, bis eine Testmatrix abgearbeitet ist und die letzte Schweißnaht Sn in die Folienbahn eingebracht wurde.

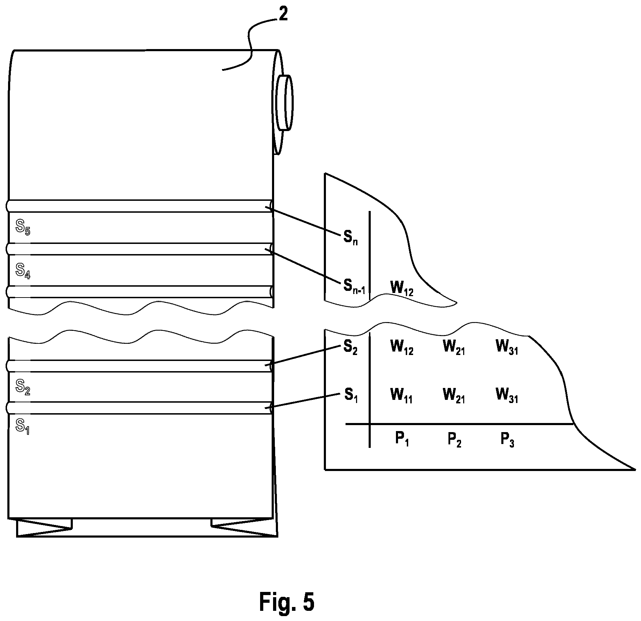

Die hierdurch produzierte Folienbahn ist in Figur 5 in isometrischer Ansicht dargestellt. Anstelle der charakteristischen Haubenform, welche durch die Stretch-Hoodverpackungsstation im Normalbetrieb herbeigeführt wird, weist die Folienbahn 2 nach dem Durchführen der Testschweißungen 101, 102, 103 eine tapetenartige Form auf. Jede Schweißnaht S1 bis Sn kann über ihre Markierung eindeutig einem Satz von Schweißparametern P1, P2 und entsprechenden Werten W11, W12, W21, W22 zugeordnet werden. Das Vergleichen 201 kann simultan nach jedem Durchführen einer Testschweißungen 101, 102, 103 durchgeführt werden oder abschließend nachdem die letzte Schweißnaht Sn eingebracht wurde.

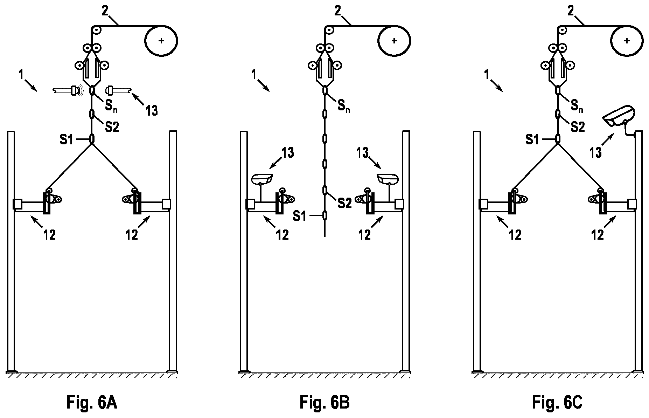

Figur 6A zeigt in schematischer Darstellung einen Querschnitt einer erfindungsgemäßen Stretch-Hoodverpackungsstation 1. Die Stretch-Hoodverpackungsstation 1 weist eine Sensoreinheit 13 auf, die dazu eingerichtet ist, eine Eigenschaft 201 zu vergleichen und vorzugsweise einen optimalen Wert 301 der Schweißparameter P1, P2 auszuwählen. Ein Sensor und eine Strahlungsquelle der Sensoreinheit sind unterhalb der Schweißeinheit in Vorschubrichtung der Folienbahn 2 stromabwärts in der Stretch-Hoodverpackungsstation 1 und jeweils unterhalb bzw. oberhalb der Folienbahn 2 angeordnet. Die Strahlungsquelle emittiert kontinuierlich oder intermittierend, nachdem eine Testschweißung durchgeführt wurde, eine Strahlung quer zur Vorschubrichtung der Folienbahn 2, beispielsweise ein monochromatisches Licht. Die Strahlung wird durch die Folienbahn 2 und die Schweißnähte S1, S2, Sn reflektiert, absorbiert und eine Reststrahlung durch den Sensor detektiert. Aus der Vorschubgeschwindigkeit, Intensität, Wellenlänge und/oder räumlichen Gradienten dieser Größen wird eine Eigenschaft der Schweißnaht Sn bestimmt.

Figur 6B zeigt in schematischer Darstellung einen Querschnitt einer erfindungsgemäßen Stretch-Hoodverpackungsstation 1. Hierbei ist jeweils ein Sensor der Sensoreinheit auf einer der vier Reiffeinheiten der Spreizeinheit 12 angebracht. Bei den Sensoren handelt es sich um CMOS-Sensoren, welche auf die Ober- bzw. Unterseite der Folienbahn 2 gerichtet sind. Nach dem Durchführen der Testschweißungen 101, 102, 103 wird das zweite Ende der Folienbahn 2 aus der Spreizeinheit 12 entnommen und die Spreizeinheit 12 in vertikaler Richtung entlang der Folienbahn 2 und den darin eingebrachten Schweißnähten S1, S2, Sn geführt. Hierbei kann die Spreizeinheit 12 und die darauf montierten Sensoren der Sensoreinheit 13 zusätzlich in horizontale Richtung an die Folienbahn heran- oder weggeführt werden. Die Sensoreinheit 13 oder eine Maschinensteuerung der Stretch-Hoodverpackungsstation 1 ist dazu eingerichtet, mittels eines Bilderkennungsalgorithmus, beispielsweise mittels eines Convolutional Neural Networks oder eines Active Contour Models, aus den Signalen der Sensoren die individuellen Schweißnähte S1, S2, Sn zu erkennen und die Eigenschaften dieser zu bestimmen. Alternativ kann, wie in Figur 6C gezeigt, ein Sensor der Sensoreinheit 13 stationär auf einem oder mehreren der Vertikalholme der Stretch-Hoodverpackungsstation 1 angeordnet sein. Da die Sensoren nicht durch die Spreizeinheit 12 an der Folienbahn 2 entlang geführt werden, kann hierbei das Vergleichen einer Eigenschaft 201 sukzessiv nach der zweiten oder weiteren Testschweißung 102, 103 durchgeführt werden.

### Bezugszeichenliste:

- 1: Ladungssicherungsstation
- 2: Folienbahn
- 11: Schweißeinheit
- 12: Spreizeinheit
- 13: Sensoreinheit
- 101: Durchführen einer ersten Testschweißung
- 102: Durchführen einer zweiten Testschweißung
- 103: Durchführen weiter Testschweißungen
- 201: Vergleichen einer Eigenschaft
- 301: Auswählen eines Optimalen Wertes
- P1: Schweißparameter
- P2: zweiter Schweißparameter
- W 11: erster Wert
- W12: zweiter Wert
- W21: erster Wert des zweiter Schweißparameter
- W22: zweiter Wert zweiter Schweißparameter
- S1: erste Schweißnaht
- S2: zweite Schweißnaht
- Sn: weitere Schweißnaht

## Patentansprüche

1. Verfahren zum Optimieren zumindest eines Schweißparameters (P1) beim Folienschweißen in einer Ladungssicherungsstation (1), vorzugsweise in eine Stretch-Hoodverpackungsstation, welches die Schritte umfasst:
- Durchführen einer ersten Testschweißung (101) durch die Ladungssicherungsstation (1) mit einem ersten Wert (W11) des Schweißparameters (P1), wobei eine erste Schweißnaht (S1) entlang einer Folienbahn (2) eingebracht wird;
- Durchführen einer zweiten Testschweißung (201) durch die Ladungssicherungsstation (1) mit einem zweiten Wert (W12) des Schweißparameters (P1), wobei eine zweite Schweißnaht (S2) eingebracht wird;
- Vergleichen einer Eigenschaft (30), vorzugsweise einer mechanischen Eigenschaft und/oder einer optischen Eigenschaft und/oder geometrischen Eigenschaft der ersten und zweiten Schweißnaht (S1, S2), wobei entweder die erste oder die zweite Schweißnaht (S1, S2) als optimale Schweißnaht bestimmt wird; und
- Auswählen eines optimalen Wertes des Schweißparameters (P1), wobei der optimale Wert des Schweißparameters dem Wert des Schweißparameters entspricht, mit welchem die optimale Schweißnaht eingebracht wurde.

2. Verfahren nach Anspruch 1, wobei die erste und die zweite Schweißnaht (S2) in dieselbe Folienbahn (2) eingebracht wird, wobei die Folienbahn (2) zwischen der ersten und der zweiten Testschweißung nicht durchtrennt wird.

3. Verfahren nach Anspruch 2, wobei die Folienbahn zwischen dem Durchführen der ersten und zweiten Testschweißung (101, 102) mit einem geringen Folienvorschub durch die Ladungssicherungsstation (1) geführt wird, und wobei der geringe Folienvorschub vorzugsweise weniger als und 75 %, besonders bevorzugt weniger als 50% eines Produktions-Folienvorschubs beträgt.

4. Verfahren nach einem der vorangegangenen Ansprüche, wobei mindestens ein zweiter Schweißparameter (P2) optimiert wird und wobei das Verfahren vorzugsweise das Durchführen weiterer Testschweißungen (103) umfasst, wobei zumindest ein erster Wert (W21) und ein zweiter Wert (W22) des mindestens zweiten Schweißparameters (P2) zwischen der ersten und/oder zweiten oder/oder vorzugsweise weiteren Testschweißungen variiert wird, und wobei ein optimaler Wert des zweiten Schweißparameters (P2) dem Wert des zweiten Schweißparameters (P2) entspricht, mit welchem die optimale Schweißnaht eingebracht wurde.

5. Verfahren nach Anspruch 4, wobei bei jeder Testschweißung jeweils nur einer der Werte (W11, W12, W21, W22) des Schweißparameters (P1) oder des mindestens einen zweiten Schweißparameters (P2) verändert wird.

6. Verfahren nach einem der Ansprüche 4 bis 5, wobei das Verfahren das Durchführen weiterer Testschweißungen (103) umfasst, wobei beim Durchführen weiterer Testschweißungen (103) der Wert des ersten oder des zumindest einen zweiten Schweißparameters (P1, P2) zwischen dem ersten und dem zweiten Wert (W11, W12, W21, W22) des jeweiligen Schweißparameters (P1, P2) in Inkrementen, vorzugsweise in äquidistanten Inkrementen variiert wird.

7. Verfahren nach einem der Ansprüche 4 bis 6, wobei das Verfahren das Auswählen von Basisparametern, wobei jedem der zu optimierenden Schweißparameter (P1, P2) ein Wert zugeordnet ist, umfasst und wobei der erste und zweite Wert (W11, W12, W21, W22) des ersten und/oder zumindest eines zweiten Schweißparameters automatisch aus den Basisparametern generiert wird.

8. Verfahren nach einem der vorangegangenen Ansprüche, wobei zusätzlich zu dem Schweißparameter (P1) ein Prozessparameter, vorzugsweise eine Folienvorspannung und/oder ein Folienvorschub optimiert wird und wobei beim Durchführen der Testschweißungen (101, 102, 103) ein Wert des Prozessparameters variiert wird.

9. Verfahren nach einem der vorangegangenen Ansprüche, wobei beim Vergleichen (201) ein optischer Vergleich, vorzugsweise mit einem optischen Sensor der Ladungssicherungsstation (1) zwischen den Schweißnähten (S1, S2, Sn) durchgeführt wird.

10. Verfahren nach einem der vorangegangenen Ansprüche, wobei der Vergleich (201) und/oder das Auswählen (202) automatisiert, vorzugsweise maschinengestützt, besonders bevorzugt mittels Maschine Learning durchgeführt wird.

11. Verfahren nach einem der vorangegangenen Ansprüche, wobei beim Vergleichen (201) jeder Schweißnaht (S1, S2, Sn) ein Gütewert zugeordnet wird, welcher die Eigenschaft der Schweißnaht quantifiziert, und wobei basierend auf den Gütewerten ein optimaler Wert des Schweißparameters (P1, P2) interpoliert wird oder ein weiterer Wert des Schweißparameters (P1, P2) für eine zusätzliche Testschweißung generiert wird.

12. Verfahren nach einem der vorangegangenen Ansprüche, wobei das Verfahren das Identifizieren eines Fehlers aufweist, wobei die Eigenschaft der ersten und/oder zweiten und/oder weiteren Schweißnaht (S1, S2, Sn) mit in einer Datenbank hinterlegten fehlerspezifischen Eigenschaften abgeglichen wird, wobei jeder fehlerspezifischen Eigenschaft zumindest ein Fehler zugeordnet ist.

13. Verfahren nach einem der vorangegangenen Ansprüchen, wobei nach dem Auswählen eines optimalen Wertes die Eigenschaften und/oder die Werte (W11, W12, W21, W22) der Schweißparameter, und/oder die optimalen Werte der Schweißparameter und/oder der Fehler und/oder Betriebsbedingungen der Ladungssicherungsstation in einer Datenbank als Datensatz hinterlegt werden, wobei der Datensatz der Landungssicherungsstation (1) und/oder zumindest einer weiteren Ladungssicherungsstation (1) bereitgestellt und vorzugsweise Basisparameter aus dem Datensatz ausgewählt werden.

14. Ladungssicherungsstation (1) eingerichtet zum Durchführen eines Verfahrens nach einem der Ansprüche 1 bis 13.

15. Landungssicherungsstation nach Anspruch 14, welche eine Sensoreinheit (13) aufweist, die dazu eingerichtet ist, ein Vergleichen einer Eigenschaft (201) und vorzugsweise ein Auswählen eines optimalen Wertes (201) des Schweißparameters (P1) durchzuführen.

16. Landungssicherungsstation nach Anspruch 15, wobei die Sensoreinheit (13) in einer Vorschubsrichtung einer Folienbahn (2) stromabwärts einer Schweißeinheit (12) in oder an der Ladungssicherungsstation angeordnet ist und vorzugsweise dazu eingerichtet ist, die Folienbahn in einer Ebene parallel zur Vorschubsrichtung abzutasten, um ein Vergleichen einer Eigenschaft (201) durchzuführen.

## Geänderte Patentansprüche

### Geänderte Patentansprüche gemäss Regel 137(2) EPÜ.

1. Verfahren zum Optimieren zumindest eines Schweißparameters (P1) beim Folienschweißen in einer Ladungssicherungsstation (1), vorzugsweise in eine Stretch-Hoodverpackungsstation, welches die Schritte umfasst:
- Durchführen einer ersten Testschweißung (101) durch die Ladungssicherungsstation (1) mit einem ersten Wert (W11) des Schweißparameters (P1), wobei eine erste Schweißnaht (S1) entlang einer Folienbahn (2) eingebracht wird;
- Durchführen einer zweiten Testschweißung (102) durch die Ladungssicherungsstation (1) mit einem zweiten Wert (W12) des Schweißparameters (P1), wobei eine zweite Schweißnaht (S2) eingebracht wird;
- Vergleichen einer Eigenschaft (30), vorzugsweise einer mechanischen Eigenschaft und/oder einer optischen Eigenschaft und/oder geometrischen Eigenschaft der ersten und zweiten Schweißnaht (S1, S2), wobei entweder die erste oder die zweite Schweißnaht (S1, S2) als optimale Schweißnaht bestimmt wird; und
- Auswählen eines optimalen Wertes des Schweißparameters (P1), wobei der optimale Wert des Schweißparameters dem Wert des Schweißparameters entspricht, mit welchem die optimale Schweißnaht eingebracht wurde.

2. Verfahren nach Anspruch 1, wobei die erste und die zweite Schweißnaht (S1, S2) in dieselbe Folienbahn (2) eingebracht wird, wobei die Folienbahn (2) zwischen der ersten und der zweiten Testschweißung nicht durchtrennt wird.

3. Verfahren nach Anspruch 2, wobei die Folienbahn zwischen dem Durchführen der ersten und zweiten Testschweißung (101, 102) mit einem geringen Folienvorschub durch die Ladungssicherungsstation (1) geführt wird, und wobei der geringe Folienvorschub vorzugsweise weniger als und 75 %, besonders bevorzugt weniger als 50% eines Produktions-Folienvorschubs beträgt.

4. Verfahren nach einem der vorangegangenen Ansprüche, wobei mindestens ein zweiter Schweißparameter (P2) optimiert wird und wobei das Verfahren vorzugsweise das Durchführen weiterer Testschweißungen (103) umfasst, wobei zumindest ein erster Wert (W21) und ein zweiter Wert (W22) des mindestens zweiten Schweißparameters (P2) zwischen der ersten und/oder zweiten oder/oder vorzugsweise weiteren Testschweißungen variiert wird, und wobei ein optimaler Wert des zweiten Schweißparameters (P2) dem Wert des zweiten Schweißparameters (P2) entspricht, mit welchem die optimale Schweißnaht eingebracht wurde.

5. Verfahren nach Anspruch 4, wobei bei jeder Testschweißung jeweils nur einer der Werte (W11, W12, W21, W22) des Schweißparameters (P1) oder des mindestens einen zweiten Schweißparameters (P2) verändert wird.

6. Verfahren nach einem der Ansprüche 4 bis 5, wobei das Verfahren das Durchführen weiterer Testschweißungen (103) umfasst, wobei beim Durchführen weiterer Testschweißungen (103) der Wert des ersten oder des zumindest einen zweiten Schweißparameters (P1, P2) zwischen dem ersten und dem zweiten Wert (W11, W12, W21, W22) des jeweiligen Schweißparameters (P1, P2) in Inkrementen, vorzugsweise in äquidistanten Inkrementen variiert wird.

7. Verfahren nach einem der Ansprüche 4 bis 6, wobei das Verfahren das Auswählen von Basisparametern, wobei jedem der zu optimierenden Schweißparameter (P1, P2) ein Wert zugeordnet ist, umfasst und wobei der erste und zweite Wert (W11, W12, W21, W22) des ersten und/oder zumindest eines zweiten Schweißparameters automatisch aus den Basisparametern generiert wird.

8. Verfahren nach einem der vorangegangenen Ansprüche, wobei zusätzlich zu dem Schweißparameter (P1) ein Prozessparameter, vorzugsweise eine Folienvorspannung und/oder ein Folienvorschub optimiert wird und wobei beim Durchführen der Testschweißungen (101, 102, 103) ein Wert des Prozessparameters variiert wird.

9. Verfahren nach einem der vorangegangenen Ansprüche, wobei beim Vergleichen (201) ein optischer Vergleich, vorzugsweise mit einem optischen Sensor der Ladungssicherungsstation (1) zwischen den Schweißnähten (S1, S2, Sn) durchgeführt wird.

10. Verfahren nach einem der vorangegangenen Ansprüche, wobei der Vergleich (201) und/oder das Auswählen (202) automatisiert, vorzugsweise maschinengestützt, besonders bevorzugt mittels Maschine Learning durchgeführt wird.

11. Verfahren nach einem der vorangegangenen Ansprüche, wobei beim Vergleichen (201) jeder Schweißnaht (S1, S2, Sn) ein Gütewert zugeordnet wird, welcher die Eigenschaft der Schweißnaht quantifiziert, und wobei basierend auf den Gütewerten ein optimaler Wert des Schweißparameters (P1, P2) interpoliert wird oder ein weiterer Wert des Schweißparameters (P1, P2) für eine zusätzliche Testschweißung generiert wird.

12. Verfahren nach einem der vorangegangenen Ansprüche, wobei das Verfahren das Identifizieren eines Fehlers aufweist, wobei die Eigenschaft der ersten und/oder zweiten und/oder weiteren Schweißnaht (S1, S2, Sn) mit in einer Datenbank hinterlegten fehlerspezifischen Eigenschaften abgeglichen wird, wobei jeder fehlerspezifischen Eigenschaft zumindest ein Fehler zugeordnet ist.

13. Verfahren nach einem der vorangegangenen Ansprüchen, wobei nach dem Auswählen eines optimalen Wertes die Eigenschaften und/oder die Werte (W11, W12, W21, W22) der Schweißparameter, und/oder die optimalen Werte der Schweißparameter und/oder der Fehler und/oder Betriebsbedingungen der Ladungssicherungsstation in einer Datenbank als Datensatz hinterlegt werden, wobei der Datensatz der Landungssicherungsstation (1) und/oder zumindest einer weiteren Ladungssicherungsstation (1) bereitgestellt und vorzugsweise Basisparameter aus dem Datensatz ausgewählt werden.

14. Ladungssicherungsstation (1) eingerichtet zum Durchführen eines Verfahrens nach einem der Ansprüche 1 bis 13.

15. Landungssicherungsstation nach Anspruch 14, welche eine Sensoreinheit (13) aufweist, die dazu eingerichtet ist, ein Vergleichen einer Eigenschaft (201) und vorzugsweise ein Auswählen eines optimalen Wertes (201) des Schweißparameters (P1) durchzuführen.

16. Landungssicherungsstation nach Anspruch 15, wobei die Sensoreinheit (13) in einer Vorschubsrichtung einer Folienbahn (2) stromabwärts einer Schweißeinheit (12) in oder an der Ladungssicherungsstation angeordnet ist und vorzugsweise dazu eingerichtet ist, die Folienbahn in einer Ebene parallel zur Vorschubsrichtung abzutasten, um ein Vergleichen einer Eigenschaft (201) durchzuführen.
